# EUROPEAN PATENT APPLICATION

(11) **EP 2 357 817 A1**
(43) Date of publication of application: **17.08.2011**
(21) Application number: 09306326.1
(22) Date of filing: 24.12.2009
(51) Int. Cl.: H04N 7/14

(54) **Terminal and system for video communication**

(71) Applicant: Alcatel Lucent, 75008 Paris (FR)
(72) Inventor: Peeters, Michael, 2547 Lint (BE)
(74) Representative: D'Halleweyn, Nele Veerle Trees Gertrudis

(57) **Abstract**

The present invention relates to a wireless video communication terminal, more specifically a terminal for allowing a point-to-point exchange of audio and video information. The present invention also relates to a system comprising a plurality of video communication terminals. According to an aspect of the invention, there is provided a video communication terminal having a substantially planar shape with a front side and a rear side, said video communication terminal comprising display means extending substantially over said front side, wall mounting means provided on said rear side, and a wireless communication means for receiving video information.

## Description

The present invention relates to a wireless video communication terminal, more specifically a terminal for allowing a point-to-point exchange of audio and video information. The present invention also relates to a system comprising a plurality of video communication terminals.

### Background

Known terminals for point-to-point video communication comprise a display and a camera, and means to transmit and receive video signals between the local site and the site of the remote correspondent. When it is desired to conduct multiple simultaneous point-to-point video sessions, it is necessary to either divide the display in regions for displaying the respective images from the different correspondents, or to use multiple independent terminals.

### Summary of the Invention

The present invention relates to a flexibly placeable and extensible video communication terminal. By combining multiple video communication terminals according to the invention, a spatially distributed telepresence system is obtained.

Embodiments of the present invention are based on the insight that even a less-than-life size representation of a person drastically improves the impression of presence during a phone call. Thus, the use of a small window or "card", equipped with functionality such as a sound capturing and reproduction, a camera, and a display, could convey a telepresence illusion.

Embodiments of the present invention are further based on the insight that the combination of multiple terminals as described above, may lead to a spatially distributed telepresence environment, which is particularly efficient with a view to convey a simultaneous telepresence illusion vis-à-vis multiple remote correspondents.

According to an aspect of the invention, there is provided a video communication terminal having a substantially planar shape with a front side and a rear side, said video communication terminal comprising display means extending substantially over said front side, wall mounting means provided on said rear side, and a wireless communication means for receiving video information.

In an embodiment of the video communication terminal of the present invention, the wireless communication means is situated between said front side and said rear side.

In an embodiment of the video communication terminal of the present invention, the wall mounting means comprise a magnetic zone.

In an embodiment, the video communication terminal of the present invention further comprises video capturing means directed to a region in front of said display means, and the wireless communication means is adapted to transmit video information obtained from the video capturing means. In a particular embodiment, the video communication terminal of the present invention is adapted to transmit video information limited to an angle of view which is substantially equal to an angle under which an image displayed by said display means may be adequately viewed. In a more particular embodiment, the video capturing means has an angle of view which is substantially equal to an angle under which an image displayed by said display means may be adequately viewed.

In an embodiment of the video communication terminal of the present invention, the substantially planar shape has a substantially hexagonal circumference.

In an embodiment, the video communication terminal of the present invention further comprises short range communication means for relaying video information from and to a like terminal. In a particular embodiment, the short range communication means is situated between said front side and said rear side. In a particular embodiment, the short range communication means comprise a transmitter and a receiver, said transmitter and said receiver comprising optical components for conducting free-space optical communication. A particular embodiment of the terminal of the invention has a peripheral side, wherein said transmitter and said receiver are arranged on said peripheral side.

According to another aspect of the present invention, there is provided a video communication system comprising a plurality of video communication terminals according to any of the preceding claims, and a gateway for providing access to a communication network, said plurality of video communication terminals being operationally coupled to said gateway for exchanging video information with correspondents.

In an embodiment of the video communication system of the present invention, a first one of said plurality of video communication terminals is directly coupled with said gateway, and other ones of said plurality of video communication terminals are indirectly coupled with said gateway via said first one of said plurality of wireless video communication terminals.

### Brief Description of the Figures

Some embodiments of apparatus and/or methods in accordance with embodiments of the present invention are now described, by way of example only, and with reference to the accompanying drawings, in which:
Figure 1 illustrates a front view of an embodiment of a video communication terminal according to the invention;
Figure 2 illustrates a rear view of an embodiment of a video communication terminal according to the invention;

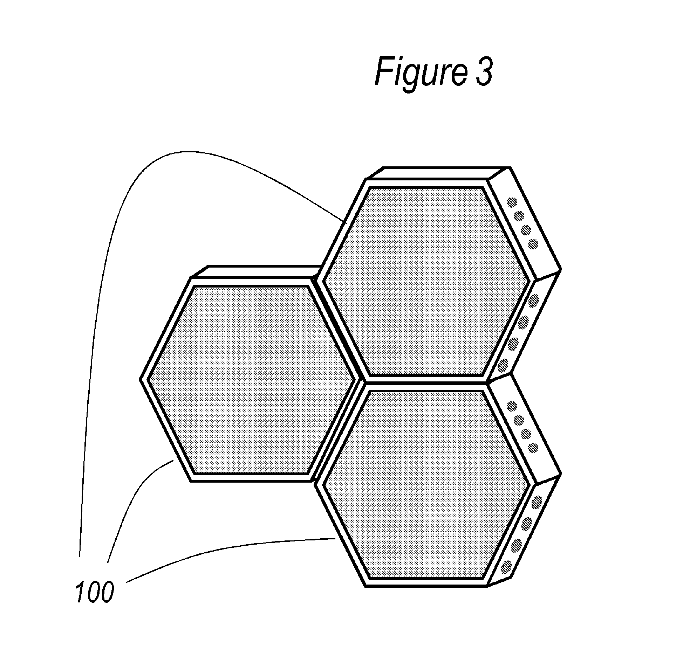

Figure 3 illustrates an embodiment of a video communication system according to the invention;
Figure 4 illustrates an exemplary networked deployment of the video communication system according to the invention; and
Figure 5 depicts a schematic representation of the components of an embodiment of the terminal according to the present invention.

### Description of Embodiments

Throughout the Figures, like elements are designated with like reference numerals.

Embodiments of the video communication terminal of the present invention may have various properties that allow them to be flexibly placed in a spatial context such as a home or an office. Some embodiments have further properties that allow them to interact with like terminals, in order to provide shared capabilities that exceed the capabilities of the individual terminals.

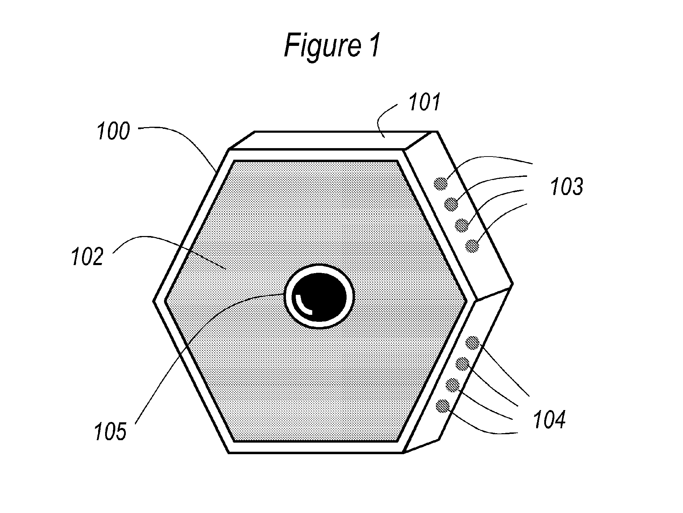

Referring to Figure 1, an embodiment of the video communication terminal **100** according to the present invention comprises a substantially planar structure **101** with a regular shape, preferably a tessellating shape, such as a rectangle or a hexagon. The front side of the terminal comprises a display means **102.** In an embodiment of the terminal of the present invention, the display means **102** comprises a flat panel display, which may *inter alia* be based on LCD, TFT, or plasma technology. Said display means **102** extends substantially over the front side of the terminal **100.** In another embodiment of the terminal of the present invention, the display means comprises a digital image projector.

Video communication includes the displaying by the display means **102** of video information received from a source outside the terminal **100,** in particular from a remote correspondent attached to a common network infrastructure.

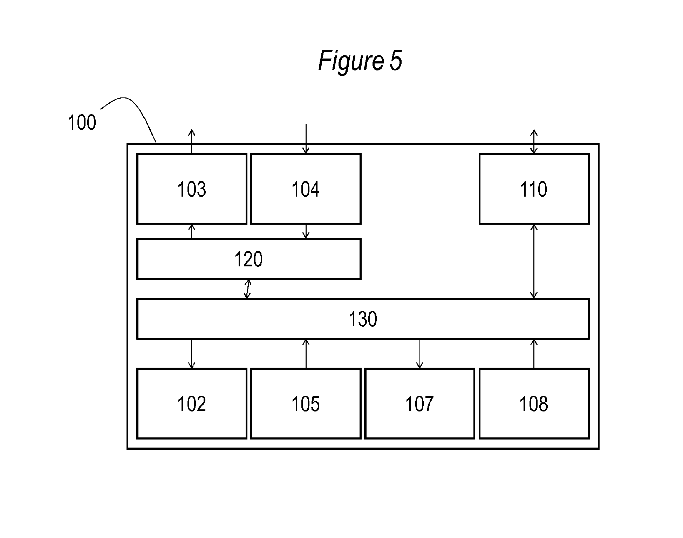

To receive this video information, the terminal **100** of the present invention is equipped with a wireless communication means **110,** schematically shown in Figure 5. The wireless communication means **110** preferably operates according to one of the known standards for optical or radio-frequency wireless local area networks or wireless personal area networks, such as Bluetooth, IEEE 802.11, IEEE 802.15, IRDA, and similar standards. As communication means according to those standards are not suitable for long-range communication, the wireless communication is conducted between the terminal **100** and a suitable gateway **400,** which is adapted to also communicate with a wide area network such as the internet or the public switched telephone network (PSTN). The gateway may be a suitably equipped general-purpose personal computer.

The terminal **100** further comprises the usual decoding means **130,** adapted to transform digital signals comprising video information, received via the wireless communication means **110,** into images displayed on the display means **102.** Decoding means **130** may be implemented as a dedicated hardware component such as an ASIC, as software running on a general purpose processor, or as any other appropriately configured component or set of components.

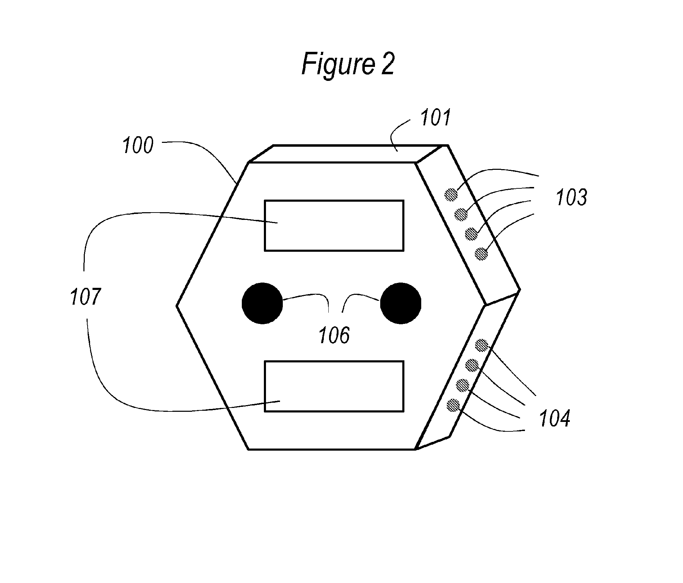

As illustrated in Figure 2, the rear side of the terminal **100** comprises attachment means **107** for attaching the terminal to a wall. In an embodiment, the attachment means **107** comprises one or more magnets for attaching the terminal on a wall comprising ferromagnetic material. The magnets provided on the rear side of the terminal **100** should be sufficiently large and strong to hold the terminal **100** in place when placed on such a wall, considering the weight of the terminal **100.** Alternatively, the wall mounting means may comprise holes or slots for receiving the head of a screw or a nail provided in the wall, or similar elements for mechanically fastening the terminal to the wall, preferably in a removable way. The wall mounting means is preferably integrated in the terminal **100.**

In the embodiment illustrated in Figure 2, the rear side of the terminal **100** is further equipped with power terminals **106,** which are preferably judiciously shaped and positions to allow the terminal **100** to draw electrical power from similarly shaped power strips arranged on a wall. Said power strips comprise an electrically conductive material. A potential difference is applied to spatially alternating strips by a conventional power source. The strips are preferably covered by a thin layer of insulating material, which is easily traversed by an alternating current through capacitive coupling.

Embodiments of the terminal **100** of the present invention preferably comprise a battery, to provide power to the terminal. A battery may be provided regardless of whether the power terminals **106** are present or not. In the former case, the battery is preferably a rechargeable battery, which may be recharged by the current obtained from the power terminals **106.**

The combination of wireless communication and battery or wall-based powering, result in a terminal **100** that may operate wherever the user may choose to place it. Hence, it becomes possible to scatter terminals **100** around the room, enjoying multiple point-to-point video links at the same time, creating a unique multi-faceted telepresence experience.

Preferably, the front side of the terminal further comprises a camera **105.** If the selected display technology permits translucency when the display is in operation, the camera **105** is preferably situated behind the display panel, more preferably in a substantially central position, such that an eye-to-eye image of a user of the terminal may be captured when the user watches the display. If the selected display technology does not permit this, the camera **105** is preferably located on the frontal side along an edge of the terminal. In a preferred embodiment, the camera **105** captures high-definition images.

If a camera **105** is present, the terminal **100** further comprises the usual encoding means to transform the signal received from the camera in to appropriately formatted digital data for transmission via the wireless communication means **110.** The encoding means may be implemented in the same way as, and preferably jointly with, the decoding means **130.**

The terminal **100** may further comprise sound capturing means **108** and sound reproducing means **107,** such as a microphone and a speaker, respectively. Flat panel speakers are specifically suited for this purpose, given their substantially planar shape. The usual required encoding and decoding means for processing sound may be implemented in the same way as, and preferably jointly with, the decoding means **130.** Preferably, the audio capturing device **108** comprises a directional microphone, allowing the user to have a more private conversation with a single correspondent by directing his speech toward the terminal **100** in question.

An embodiment of terminal **100** comprising video and sound capturing means and sound reproducing means may advantageously be used for full bidirectional point-to-point audiovisual communication, linking two sites to each other by the exchange of video images and sound.

Embodiments of the present invention are based on the insight that the sense of telepresence obtained in a video communication session may be improved by ensuring that the angle of view presented by the display corresponds to the angle of view of the camera, creating a situation in which the user knows that he can only be seen by his correspondent when he is in the zone from which he can see the correspondent, which will be experienced as a very natural reciprocity. Such an arrangement also enhances the sense of privacy, despite the presence of one or more cameras. This effect may be obtained by limiting the angle of view of the user image that is transmitted to the remote correspondent, to an angle under which the display may be adequately viewed locally. The limiting may take place by optical means, i.e. by optically zooming the camera **105,** or by digitally cropping the image captured by the camera **105.**

Embodiments of the present invention are based on the insight that the sense of telepresence obtained in a video communication session may be further improved by controlling the angle of view represented by the displayed image to coincide with the angle that one might have through an actual window of the same size and at the same distance as the terminal display. To this end, the embodiment of the terminal **100** of the present invention is equipped with viewer localization means, the information of which is used to control the camera of the correspondent's terminal, or to process the image provided by the correspondent's camera to mimic the zooming and panning movements necessitated by the local user's movements, taking into account the geometry of the display **102.** Hence, it will be understood that a relative movement of the user towards the display **102** of the terminal **100**, would advantageously lead to a zooming out of the displayed image, in the same way that approaching a window leads to an enlargement of the angle of view through the window. Reciprocally, a relative movement of the user away from the display **102** of the terminal **100,** would advantageously lead to a zooming in of the displayed image, in the same way that retreating from a window leads to a narrowing of the angle of view through the window. Likewise, head movements to the left and to the right would advantageously lead to camera panning to the right and to the left, respectively.

The viewer localization means may be implemented as a processing means applying a head-tracking algorithm to images obtained from the camera. The viewer localization means is preferably implemented on the same hardware platform as the decoding means **130.**

Preferably, interfacing means **103, 104** are provided in the terminal **100** to allow short range communication. The purpose of the interfacing means **103, 104** is to transmit and receive video and optionally audio information between the local terminal **100** and another terminal in its vicinity. To this end, the terminal employs the usual encoding and decoding means **130** described above, adapted to transform audio and video information into digital signals and vice versa, and bridging circuitry **120** which will be easy for the skilled person to implement.

In an embodiment, the interfacing means **103, 104** are positioned on one or more of the peripheral sides of the terminal **100.** In a particular embodiment, these interfacing means comprise optical transmitters **103** and receivers **104,** such as infrared LEDs and photodiodes, respectively. As is known to the skilled person, these elements allow for short-distance line-of-sight (LOS) communication of digital information.

The interfacing means **103, 104** may have components in common with the wireless communication means **110.**

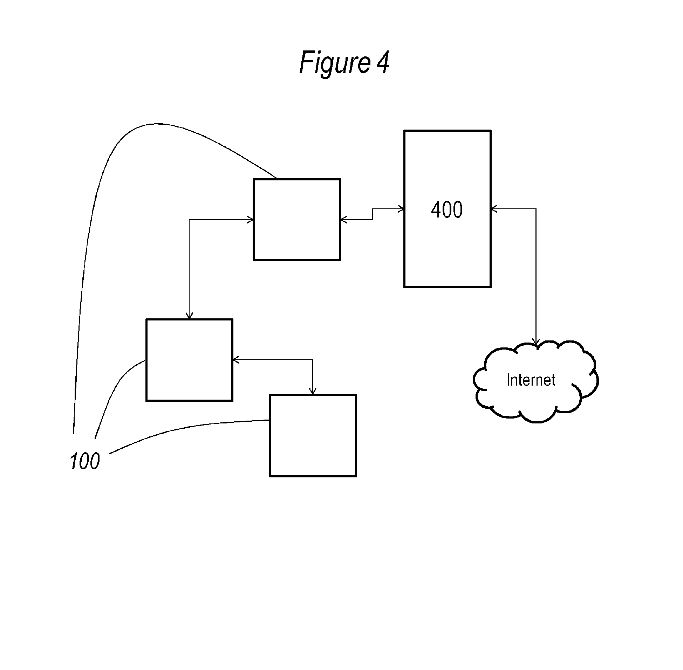

If a LOS communication technology is employed, the foregoing features combine to allow a set of terminals, arranged on the same wall, to communicate with each other, provided that the respective transmitters **103** and receivers **104** are sufficiently aligned, as is the case in the assembly shown in Figure 4. Assuming the supporting wall to be flat, the alignment problem is reduced to a two-dimensional problem, because the alignment along the plane of the wall takes care of the third dimension. The alignment problem may further be alleviated by providing a sufficiently wide angle for the transmit beam. It is advantageous to provide judiciously positioned optical deflectors along corners between walls, in order to allow terminals arranged on different adjoining walls to communicate with each other. If a non-line-of-sight (NLOS) communication technology is employed, such as RF communication, the alignment problem does not appear.

An advantage of a terminal **100** with a tessellating shape is that multiple terminals may be arranged in a plane, for example on the same wall, in a very close relationship. An additional advantage of a terminal **100** with a hexagonal shape, and hence a hexagonal display **102,** is that such a display is more suited for displaying a close-up image of a human face than a rectangular display. Combining these advantages, it can be seen that a plurality of terminals according to this embodiment may be arranged as a cloud of faces.

An additional advantage of a terminal **100** with a display **102** that substantially covers its entire front surface, is that a plurality of closely arranged terminals may be used a single composite display, for displaying an image that exceeds the size of every individual display **102.**

The terminal **100** according to the present invention is preferably small, with a front surface area that is preferably less than 0,67 m², and more preferably around 0,01 m². It has been shown that the availability of even a small image of a telephone correspondent augments the sense of presence significantly over the situation where there is no image present.

The various components of the terminal **100** according to the present invention, including the wireless communication means **110,** are preferably situated internally, that is to say between the front side and the rear side and within the peripheral edges, without protruding beyond the substantially planar structure. This ensures a smooth tessellation of the terminals **100.**

A plurality of terminals **100** as described above may be combined to form a system according to the present invention, as illustrated in Figure 4. The multi-party video communication experience that can be provided with this system differs significantly from the known systems. In known systems, multiple point-to-point video conversations typically share a single display, by virtue of different video windows shown on the display. Furthermore, multiple point-to-point video conversations conducted through known system typically also share a single camera. The system of the invention, on the other hand, provides a dedicated camera/display combination for each video conversation, allowing the different conversations to be spatially separated by distributing the terminals around the room. The resulting environment resembles a room with multiple windows into different remote environments.

In embodiments of the system, terminals are in communication with each other to form a relaying network, as schematically illustrated in Figure 4, wherein one of the terminals is in communication with a gateway **400** to a larger area communication network, labeled "Internet" in Figure 4. Thus, all the other terminals **100** can communicate with the entire communication network, while only expending the power required to communicate with their immediate neighbor. The increased power-efficiency is particularly advantageous in battery-operated terminals.

When multiple terminals **100** according to the invention are simultaneously in use, a unique point-to-multipoint video communication setting can be created, in which the local user may interact with each of the remote correspondents as if they are standing behind so many windows in the walls of his room. With adequate positioning of the terminals **100**, such that different remote correspondents can see each other's displayed video images, the video communication may be extended to a partial or full multipoint-to-multipoint communication. Furthermore, it is clearly possible to set up a multipoint conference between N participants by setting up *N(N-1)*/*2* simultaneous point-to-point communications according to the invention, whereby each participant is free to position his *N-1* terminals in his local environment.

The description and drawings merely illustrate the principles of the invention. It will thus be appreciated that those skilled in the art will be able to devise various arrangements that, although not explicitly described or shown herein, embody the principles of the invention and are included within its spirit and scope. Furthermore, all examples recited herein are principally intended expressly to be only for pedagogical purposes to aid the reader in understanding the principles of the invention and the concepts contributed by the inventor to furthering the art, and are to be construed as being without limitation to such specifically recited examples and conditions. Moreover, all statements herein reciting principles, aspects, and embodiments of the invention, as well as specific examples thereof, are intended to encompass equivalents thereof.

The functions of the various elements shown in the Figures, including any functional blocks labeled as "processors", may be provided through the use of dedicated hardware as well as hardware capable of executing software in association with appropriate software. When provided by a processor, the functions may be provided by a single dedicated processor, by a single shared processor, or by a plurality of individual processors, some of which may be shared. Moreover, explicit use of the term "processor" or "controller" should not be construed to refer exclusively to hardware capable of executing software, and may implicitly include, without limitation, digital signal processor (DSP) hardware, network processor, application specific integrated circuit (ASIC), field programmable gate array (FPGA), read only memory (ROM) for storing software, random access memory (RAM), and non volatile storage. Other hardware, conventional and/or custom, may also be included. Similarly, any switches shown in the FIGS. are conceptual only. Their function may be carried out through the operation of program logic, through dedicated logic, through the interaction of program control and dedicated logic, or even manually, the particular technique being selectable by the implementer as more specifically understood from the context.

## Claims

1. A video communication terminal having a substantially planar shape with a front side and a rear side, said video communication terminal comprising display means extending substantially over said front side, wall mounting means provided on said rear side, and a wireless communication means for receiving video information.

2. The video communication terminal of claim 1, wherein said wireless communication means is situated between said front side and said rear side.

3. The video communication terminal of any of the preceding claims, wherein said wall mounting means comprise a magnetic zone.

4. The video communication terminal of any of the preceding claims, further comprising video capturing means directed to a region in front of said display means, said wireless communication means being adapted to transmit video information obtained from said video capturing means.

5. The video communication terminal of claim 4, adapted to transmit video information limited to an angle of view which is substantially equal to an angle under which an image displayed by said display means may be adequately viewed.

6. The video communication terminal of claim 5, wherein said video capturing means has an angle of view which is substantially equal to an angle under which an image displayed by said display means may be adequately viewed.

7. The video communication terminal of any of the preceding claims, wherein said substantially planar shape has a substantially hexagonal circumference.

8. The video communication terminal of any of the preceding claims, further comprising short range communication means for relaying video information from and to a like terminal.

9. The video communication terminal of claim 8, wherein said short range communication means is situated between said front side and said rear side.

10. The video communication terminal of claim 8 or 9, wherein said short range communication means comprise a transmitter and a receiver, said transmitter and said receiver comprising optical components for conducting free-space optical communication.

11. The video communication terminal of claim 10, further having a peripheral side, wherein said transmitter and said receiver are arranged on said peripheral side.

12. A video communication system comprising a plurality of video communication terminals according to any of the preceding claims, and a gateway for providing access to a communication network, said plurality of video communication terminals being operationally coupled to said gateway for exchanging video information with correspondents.

13. The video communication system of claim 12, wherein a first one of said plurality of video communication terminals is directly coupled with said gateway, and wherein other ones of said plurality of video communication terminals are indirectly coupled with said gateway via said first one of said plurality of wireless video communication terminals.

## Amended claims

### Amended claims in accordance with Rule 137(2) EPC.

**1.** A video communication terminal (100) having a substantially planar shape with a front side and a rear side, said video communication terminal comprising display means (102) extending substantially over said front side, and wall mounting means (107) provided on said rear side, and a wireless communication means (110) for receiving video information, **characterized in that** said video communication terminal (100) further comprises short range communication means (103, 104) for relaying video information from and to a like terminal (100).

**2.** The video communication terminal (100) of claim 1, wherein said wireless communication means (110) is situated between said front side and said rear side.

**3.** The video communication terminal (100) of any of the preceding claims, wherein said wall mounting means (107) comprise a magnetic zone.

**4.** The video communication terminal (100) of any of the preceding claims, further comprising video capturing means (105) directed to a region in front of said display means (102), said wireless communication means (110) being adapted to transmit video information obtained from said video capturing means (105).

**5.** The video communication terminal (100) of claim 4, adapted to transmit video information limited to an angle of view which is substantially equal to an angle under which an image displayed by said display means (102) may be adequately viewed.

**6.** The video communication terminal (100) of claim 5, wherein said video capturing means (105) has an angle of view which is substantially equal to an angle under which an image displayed by said display means (102) may be adequately viewed.

**7.** The video communication terminal (100) of any of the preceding claims, wherein said substantially planar shape has a substantially hexagonal circumference.

**8.** The video communication terminal (100) of any of the preceding claims, wherein said short range communication means (103, 104) is situated between said front side and said rear side.

**9.** The video communication terminal (100) of any of the preceding claims, wherein said short range communication means comprise a transmitter (103) and a receiver (104), said transmitter (103) and said receiver (104) comprising optical components for conducting free-space optical communication.

**10.** The video communication terminal (100) of claim 9, further having a peripheral side, wherein said transmitter (103) and said receiver (104) are arranged on said peripheral side.

**11.** A video communication system comprising a plurality of video communication terminals (100) according to any of the preceding claims, and a gateway (400) for providing access to a communication network, said plurality of video communication terminals (100) being operationally coupled to said gateway (400) for exchanging video information with correspondents.

**12.** The video communication system of claim 11, wherein a first one of said plurality of video communication terminals (100) is directly coupled with said gateway (400), and wherein other ones of said plurality of video communication terminals (100) are indirectly coupled with said gateway (400) via said first one of said plurality of wireless video communication terminals (100).
